Europäisches Patentamt

European Patent Office

Office européen des brevets

(11) Publication number: **0 438 817 A1**

# EUROPEAN PATENT APPLICATION

(21) Application number: **90203169.9**

(22) Date of filing: **03.12.90**

(51) Int. Cl.⁵: **G02F 1/1347, H04N 9/31**

(30) Priority: **08.12.89 US 448023**

(43) Date of publication of application:
**31.07.91 Bulletin 91/31**

(84) Designated Contracting States:
**DE FR GB NL**

(71) Applicant: **N.V. Philips' Gloeilampenfabrieken
Groenewoudseweg 1
NL-5621 BA Eindhoven(NL)**

(72) Inventor: **Sorkin, Howard
c/o INT. OCTROOIBUREAU B.V., Prof.
Holstlaan 6
NL-5656 AA Eindhoven(NL)**

(74) Representative: **Raap, Adriaan Yde et al
INTERNATIONAAL OCTROOIBUREAU B.V.
Prof. Holstlaan 6
NL-5656 AA Eindhoven(NL)**

(54) **Double cell twisted nematic LCD and color display device employing same.**

(57) The dark off-state and thus the contrast ratio of a twisted nematic liquid crystal display is improved by adding a second liquid crystal cell of equal thickness and equal but opposite twist angle in series with the first cell. Three such double cell LCDs (54-56) are employed in a color projection TV to produce the red, blue and green components of a full color image having improved contrast ratio.

EP 0 438 817 A1

# DOUBLE CELL TWISTED NEMATIC LCD AND COLOR DISPLAY DEVICE EMPLOYING SAME.

## BACKGROUND OF THE INVENTION

This invention relates to twisted nematic liquid crystal displays (TN LCDs), and more particularly relates to TN LCDs operating in the dark off-state, and also relates to display devices incorporating them.

In one form of color projection television (PTV) in widespread use today, a full color display is formed by superimposing three different (red, blue and green) monochrome images on a projection screen. While these monochrome images are usually formed using cathode ray tubes (CRTs), it has also been proposed to use TN LCDs in place of the CRTs to generate the images.

In an LCD cell, a liquid crystal (LC) material is sandwitched between two optically transparent walls, the inner surfaces of which each carry an orienting layer in contact with the LC, which causes a preferential alignment of the LC molecules adjacent the layers. Because the LC molecules also tend to align with one another, a twist can be imparted to the LC by assembling the cell with a non-parallel orientation of the layers. For example, arranging the layers with their alignment directions orthogonal to one another produces a $90°$ twist of a nematic LC from one surface to the other. This twist enables the LC to rotate linearly polarized light by $90°$, so that the amount of light transmitted by the device can be controlled by a second polarizer (often called an "analyzer"). Furthermore, the LC can be untwisted by application of a voltage, so that, e.g., light blocked by an analyzer having its polarization direction oriented parallel to that of the polarizer, can be passed by application of an appropriate voltage to the LC cell.

The degree to which the LCD can provide rotation of the light depends upon the combination of wavelength of the light, cell thickness and optical anisotropy or birefringence of the LC. Non-optimum combinations can result in varying degrees of ellipticity of the polarized light, so that, e.g. between parallel polarizer and analyzer, not all of the light is blocked. Furthermore, certain orienting layers cause the adjacent LC molecules to have a tolt with respect to the cell walls which can, especially for high tilt angles, also result in such ellipticity, allowing light leakage and thus reduced contrast of an LCD display operating in the dark off-state (parallel polarizer and analyzer, no voltage applied).

For an LCD display operating in a light off-state (crossed polarizer and analyzer), the problem of light leakage in the dark state due to ellipticity of the polarized light is avoided since the dark state is achieved by applying voltage to the cell to untwist the liquid crystal molecules, that is, to cause a molecular alignment parallel to and thus having no effect upon the incoming polarized light. However, it is difficult in practice to maintain this voltage due to leakages inherent in the LCD structure. Since contrast ratio of the LCD can be expressed as

$C = T_L/T_D$,

where, $T_L$ is the transmission in the light state and $T_D$ is the transmission in the dark state,

it will be appreciated that even a small change in $T_D$ (due for example to voltage changes) has a much greater effect on contrast ratio C than a corresponding change in $T_L$.

Thus, for a contrast ratio which is less influenced by uncontrollable voltage changes, a dark off-state is preferred over a dark on state.

In order to obtain a good dark off-state (parallel polarizer and analyzer) for LCDs with a near zero tilt angle, it has been shown that one must achieve the condition of

$2\,d\Delta n/\lambda = \sqrt{3}$ (first minimum); $\sqrt{15}$ (second minimum; etc.,

where d is the cell thickness, $\Delta n$ is the optical anisotropy of the liquid crystal material, and $\lambda$ is the wavelength of the incident light. (C.H. Gooch and H.A. Tarry, Electronics Letters, 1974, Volume 10, pages 2-4.) However, for higher tilt angles such as are typical for cells with orientation layers made by obliquely vapor depositing SiO, it is not possible to obtain a good dark off-state at conventional cell thicknesses.

In addition, it will be appreciated that based upon the above relationship, for a given liquid crystal material having a given optical anisotropy, the thickness of each cell must be chosen to achieve optimum contrast ratio for the particular wavelength of incident light associated with that cell. Thus, where two or more LCDs are used to generate separate monochrome images which are then superimposed to form a color display, such as in PTV, the thickness of each cell must be different. However, from the standpoint of manufacturing efficiencies, it would be desirable to have all cells of the same thickness.

The contrast ratio of super twisted nematic (STN) LCDs has been improved using a second cell of opposite twist. See "Multicolor Display by Double-Layered Supertwisted - Nematic LCD", Kimura et al, SID 88 Digest, 49. However, the bistable nature of these STN devices as well as their complexity and their slow response times make them unsuitable for use in video applications.

## OBJECTS AND SUMMARY OF THE INVENTION

It is an object of the invention to provide a dark off-state TN LCD having improved contrast ratio.

It is another object of the invention to provide a TN LCD whose transmission and therefore whose contrast ratio is substantially independent of cell thickness or wavelength of the incident radiation.

It is another object of the invention to provide a display device incorporating two or more dark off-state TN LCDs in which at least one of these LCDs exhibits improved contrast ratio.

It is a further object of the invention to provide such a display device in which the improved contrast ratio does not vary substantially with cell thickness or wavelength of the incident radiation.

In accordance with the invention, the contrast ratio of a TN LCD operating in the dark off-state is significantly improved by adding a second cell, called a compensation cell, in series with the first cell. The second cell has about the same thickness and a liquid crystal with about the same optical anisotropy as the first cell, but has a different chiral additive to provide an opposite twist direction. The effect of this second cell is to impart a rotation to the polarized light which is equal but opposite to that imparted by the first cell, thus cancelling any ellipticity of the polarized light caused by deviations of cell thickness, optical anisotropy or tilt angle of the LC, or wavelength of the light, from the optimum values for a single cell LCD. As a result, the optical transmission of such a double cell TN LCD, and thus its contrast ratio (C), are substantially independent of the wavelength of the incident radiation and the cell thickness, so that different cell thickness are no longer required in order to obtain optimum contrast ratio for different wavelengths of incident radiation, for example, the separate red, blue and green channels in an LCD color projection television (PTV).

In a currently envisioned commercial embodiment of such a color PTV, the LCDs are of a known active marix type, having an array of thin film transistor (TFT) switches associated with an array of pixel elements interconnected by an array of orthogonally related row and column electrodes on one cell wall.

Furthermore, it has been discovered that such double cell TN LCDs substantially compensate for changes in transmission caused by temperature-induced changes in the optical anisotropy $\Delta n$, thus avoiding for example the occurrence of reduced contrast during the initial warm-up period for a display device.

## BRIEF DESCRIPTION OF THE DRAWING

Figure 1 is a cross-section view of one embodiment of a single cell TN LCD of the prior art;

Figure 2 is a diagrammatic cross-section view of one embodiment of a double cell TN LCD of the invention; and

Figure 3 is a diagrammatic plan view of one embodiment of a liquid crystal display (LCD) color projection television (PTV) system employing at least ond double cell TN LCD of the invention.

## DESCRIPTION OF THE PREFERRED EMBODIMENTS

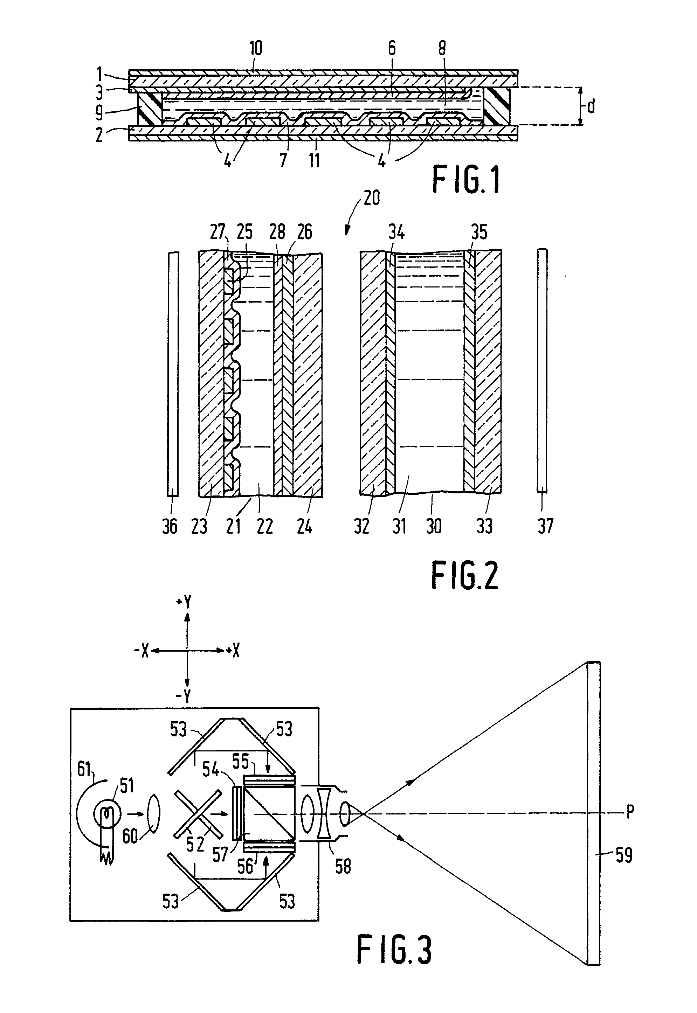

The display device shown in Figure 1 comprises two glass supporting plates 1 and 2. The supporting plate 1 carries an optically transparent counter electrode 3 consisting for example of indium tin oxide. Supporting plate 2 also carries an array of transparent pixel electrodes 4, (and associated thin film transistor (TFT) switches, interconnected by row and column electrodes, not shown). Silicon oxide (SiO) layers are vapor deposited over the inner surfaces of the supporting plates 1 and 2 and the electrodes 3 and 4, at an oblique angle to the normal of the surfaces, thus forming orientation layers 6 and 7. A nematic liquid crystal material 8, for example, a proprietary formulation known as ZLI 84-460, and manufactured by E. Merck of Darmstadt, West Germany, containing a cholesteric addition of for example, n-cyano-4'-(2-methyl)-isobutyl-biphenyl (obtainable as CB15 from BDH Chemicals of Poole, U.K.), is present between the supporting plates. The spacing between the plates is typically about 6 to 8 microns and is maintained by spacer beads which are distributed regularly over the surfaces of the plates and are not shown in the drawing. A sealing edge 9 joins the plates together at their circumference. The cholesteric addition which has been added to the nematic liquid determines the direction of twist of the liquid crystal molecules, with CB15 imparting a counter-clockwise twist. As a result of the obliquely vapor deposited silicon oxide (SiO) layers, the liquid crystal molecules undergo a rotation of approximately 90 degrees over the cell thickness, and are not parallel to the plate surfaces, but make an angle therewith, the so-called tilt angle.

The outer surfaces of the supporting plates 1 and 2 furthermore each carry a linear polarizer, designated polarizer 10, which intercepts the incident light, and analyzer 11, which intercepts the light transmitted by the device.

The display cell can be switched from a first stable state to a second stable state differing optically from the first by driving electrodes 3 and 4 in a suitable known manner. With a parallel orientation of polarizer and analyzer, a selected display cell in the off-state (no voltage applied) will be dark (light absorbing). By rotating one of the polarizer 90 degrees with respect to the other, (crossed orientation) a white (light transmitting) off-state can be achieved.

Referring now to Figure 2, there is shown a diagrammatic cross-sectional view of one embodiment of a double cell LCD of the invention, including an actively driven cell 21 with nematic liquid crystal 22 filling the space between glass plates 23 and 24. The inner surface of plate 23 carries a pattern of row electrodes 25 while the inner surfave of plate 24 carries a pattern of column electrodes 26. Vapor deposited obliquely over the glass plates and electrode patterns are orienting layers 27 and 26. A compensation cell 30, having about the same thickness as the driven cell 21, is placed immediately adjacent the driven cell 21, which compensation cell 30 also comprises a nematic liquid crystal 31 filling the space between glass plates 32 and 33, and contacting obliquely vapor deposited orienting layers 34 and 35. Polarizer 36 is located on an input side, between the incoming light indicated by the arrow and the driven cell 21, while analyzer 37 is placed adjacent the output side of compensation cell 30.

Because the drive cell rotates the polarized light through a 90° angle, and the compensation cell rotates the light back through the same angle, a parallel orientation of polarizer and analyzer will in the off-state (no voltage applied) result in a white (light transmitting) condition. By rotating one of the polarizers 90° with respect to the other (crossed orientation) a dark (light absorbing) off-state can be achieved.

It will of course be appreciated that the positions of the driven cell and compensation cell may be switched without appreciably affecting the operation of the device.

In accordance with the invention it was realized that non-optimum combinations of wavelength of the incoming light, optical anisotropy of the LC and cell thickness, as well as the relatively high tilt angle of the liquid crystal molecules relative to the SiO orienting layers, can result in ellipticity of the polarized light which prevents the analyzer from completely blocking the transmitted light in the dark off-state. It was further realized that the placing of a second cell having liquid crystal molecules of equal but opposite twist angle to the first cell would result in the substantial cancellation of this ellipticity of the polarized light, enabling substantial blockage of the light by the analyzer and the achievement of an improved dark off-state and consequently an improved contrast ratio of the liquid crystal device operating in the dark off-state.

In addition, it was realized that using the same LC in each cell enables the double cell LCD to compensate for changes in cell transmission caused by changes in optical anisotropy of the LC due to temperature excursions during operation. This compensation is possible due to the identical temperature-anisotropy relationship exhibited by the LC in each cell.

Example

In order to demonstrate the advantages of increased contrast ratio of the double cell LCDs of the invention, three sets of test cells were fabricated, having thicknesses of 6, 7 and 8 microns, respectively. One wall of each cell supported an array of pixel electrodes, each pixel electrode connected to the drain of a TFT, and an array of row and column electrodes interconnecting the pixel array. The other wall supported a counter electrode. The orienting layers of the test cells were SiO which had been previously vapor deposited at an angle of about 11° with respect to the cell walls. Each cell contained the nematic liquid crystal ZLI 84-460, one cell from each set, denominated the driven cell, doped with CB15 and assembled to achieve a 90 degrees twist of the liquid crystal molecules from one surface to the other, and another cell, denominated a compensation cell, doped with S 811 and assembled to achieve a 90 degree twist in the opposite direction. S 811 is another chiral additive, having opposite pitch-inducing properties from CB15, and is available from E. Merck.

The contrast ratio of the driven cells was then determined by measuring the white light luminance of a spot 0.05 millimeters in diameter, located in the center of the output side of the cells, between parallel polarizer and analyzer, first with no voltage applied, and then with up to 6 volts applied across the electrodes; then each driven cell was successively paired with a compensation cell, and contrast ratio was measured between crossed polarizer and analyzer. Results are shown in Table I.

### Table I

| Driven Cell (thickness in m) | Compensation Cell (thickness in m) | | | |
|---|---|---|---|---|
| | none | 6 | 7 | 8 |
| 6 | 6:1 | 25:1 | 4:1 | 5:1 |
| 7 | 39:1 | 27:1 | 64:1 | 28:1 |
| 8 | 48:1 | 21:1 | 54:1 | 55:1 |

As may be seen from the Table, when drive and compensator cells of the same nominal thickness (thickness tolerances of + 0.5 microns) were paired, contrast ratios improved significantly. For example, for the 6 micron thickness, the contrast ratio increased from 6:1 to 25:1; for 7 microns, from 39:1 to 64:1, and for 8 microns, from 48:1 to 54:1.

Thus, were the thickness of the cells are approximately the same and the liquid crystal materials 18 and 19 have substantially the same optical anisotropy and equal but opposite twist angles, the dark off-state and thus the contrast ratio of the device is significantly improved.

Furthermore, due to the effect of the compensator cell, an optimum contrast ratio can be maintained independent of cell thickness and wavelength of the incoming radiation.

Referring now to Figure 3, there is shown a diagrammatic representation of an LCD color television projection system employing a front projection screen. In this arrangement, white light from a tungsten halogen lamp 51 is variously transmitted and reflected through a crossed pair of dichroic mirrors 52 and adjacent mirrors 53 to pass through three double layer TFT liquid crystal displays 54, 55 and 56. These three LCDs modulate three channels to create the red, green and blue portions of a TV picture. The dichroic mirrors 52 break the light 51 into red, blue and green portions of the spectrum. These three color portions are then recombined by way of a dichroic prism 57. The recombined light is projected by way of a projection lens 58 along a projection axis P to a projection screen 59.

This arrangement also includes a condenser arrangement consisting of a condenser lens 60 and a reflector 61. The condenser lens 60 is designed for maximum collection efficiency to collect light emitted in the +X direction. The spherical reflector 61 collects light emitted in the -X direction and images the light of the lamp back onto itself.

Because a double cell LCD of the invention exhibits transmission values and contrast ratios substantially independent of cell thickness or wavelength of the incident radiation, such LCDs may be employed in such a projection television device with the significant advantage that, so long as each composite LCD pair has matching cell thicknesses, these matching thicknesses may be the same or may vary from LCD to LCD, thus freeing the manufacturing process from the requirement for the use of different optimum thicknesses for different wavelengths and from the requirements for close tolerances on thickness.

Furthermore, such double cell LCDs of the invention are capable of compensating for changes in optical anisotropy brought about by temperature excursions occurring during device operation, particularly the initial warm-up period after device turn on.

While the invention has been described in terms of cells with obliquely deposited SiO orienting layers, it is to be understood that cells with other orienting layers, including those with lower tilt angles, such as rubbed polyimide layers, may also benefit from the teachings of the invention.

## Claims

1. A display device including at least two liquid crystal displays, each display comprising first and second cells in series, all cells having substantially the same thickness, each of the first and second cells comprising a pair of opposed optically transparent walls, a nematic liquid crystal containing a cholesteric addition between the walls and orienting layers on the inner surfaces of the walls in contact with the liquid crystals, the liquid crystals in the two cells having substantially the same optical anisotropy, and substantially equal but opposite twist angles, and means for creating different color displays on the LCDs.

2. The display device of Claim 1, which comprises a projection television display device including means for creating separate monochrome components of a color image on the LCDs, means for superimposing the separate components, and means for projecting the image onto a projection screen.

3. The display device of Claim 2, in which there are three LCDs for displaying red, blue and green images respectively, whereby upon cisplaying the three superimposed images on the projection screen, a full color display is realized.

4. The display device of Claim 3, in which all three of the LCDs comprise double cell LCDs.

FIG.1

FIG.2

FIG.3

European
Patent Office

**EUROPEAN SEARCH
REPORT**

Application Number

**EP 90 20 3169**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | EP-A-0 366 499   (SHARP K.K.)<br>* Abstract; column 5, lines 13-47; example 3; claims 1,5; figures 1,6 *<br>— — — | 1-4 | G 02 F<br>1/1347<br>H 04 N 9/31 |
| P,X | PATENT ABSTRACTS OF JAPAN, vol. 14, no. 223 (P-1046)[4166], 11th May 1990;<br>& JP-A-02 053 030 (MATSUSHITA ELECTRIC) 22-02-1990<br>* Abstract *<br>— — — | 1-4 | |
| X | IEEE TRANSACTIONS ON ELECTRON DEVICES, vol. 36, no. 9-I, September 1989, pages 1910-1914; A. LIEN: "Optimization of the off-states for single-layer and double-layer general twisted nematic liquid-crystal displays"<br>* Section IV *<br>— — — | 1 | |
| X | EP-A-0 284 372   (SHARP K.K.)<br>* Example 1; claims 1-2; figures 6,7a *<br>— — — | 1 | |
| A | SID 1986 DIGEST, 1986, pages 375-378; S. MOROZUMI et al.: "LCD full-color video projector"<br>* Section II; figure 1 *<br>— — — — — | 2-4 | TECHNICAL FIELDS SEARCHED (Int. Cl.5)<br><br>G 02 F<br>H 04 N |

The present search report has been drawn up for all claims

| Place of search | Date of completion of search | Examiner |
|---|---|---|
| The Hague | 08 April 91 | IASEVOLI R. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

 & : member of the same patent family, corresponding document